# EUROPEAN PATENT APPLICATION

(11) **EP 0 876 007 A2**
(43) Date of publication of application: **04.11.1998**
(21) Application number: 98302563.6
(22) Date of filing: 01.04.1998
(51) Int. Cl.: H04B 7/185

(54) **Terminal location through measures of signal strength of a plurality of radio sources**

(30) Priority: 26.04.1997 GB 9708481
(71) Applicant: ICO Services Ltd., London W6 9BN (GB)
(72) Inventor: Wyrwas, Richard, Southgate, London, N14 6LN (GB)
(74) Representative: Read, Matthew Charles

(57) **Abstract**

In a satellite 10 communications system, each satellite 10 provides an array of overlapping spot beams 30 on the surface of the earth 14, the position of each spot beam 30 being known at any instant. A terminal 48, on the earth 14, listens to all audible spot beams 30 and determines which provide signals above a predetermined level. By mapping which spot beams 30 are audible above the limit, it can rapidly be determined which zone 58 the terminal 48 occupies and thus the position of the terminal 48 on the earth 14.

## Description

The present invention relates to satellite communication systems, and a method of operating such systems. The invention particularly relates to satellite communication systems and related methods where an earth based user terminal communicates with a satellite which in turn communicates with an earth station, and vice versa. Most particularly, the present invention relates to such a system and its related methods where there is a requirement for the location of the user terminal, on the surface of the earth, to be known to the earth station.

It is known, in a satellite communications system, for a user terminal, perhaps in the form of a radio telephone handset, not dissimilar to a cellular radio telephone handset, to communicate with an earth station, via a satellite, to establish a telephone call or to receive a telephone call, by means of the earth station linking into the terrestrial wire and cable system or into another radio telephone system.

There are twin purposes relating to establishing the exact position of the user terminal on the surface of the earth. Firstly, in order to know how to direct a radio signal to or from a user terminal, when required, from a particular satellite at a particular time, it is necessary to know the approximate location of the user terminal so that the appropriate beam from the appropriate satellite can be selected to cover the portion of the Earth's surface where the user terminal is located. Secondly, in a satellite communication system, in order that call barring, local billing or other restrictions based on the territory wherein the user terminal may be operated can be observed, it is necessary to determine the location of the user terminal with sufficient accuracy for the necessary restrictions to be imposed.

It is advantageous, therefore, to provide a system and method whereby the position, on the surface of the earth, of the user terminal or handset can be determined with sufficient accuracy for communication and fiscal purposes without undue complication.

It is known for a communications satellite to provide a plurality of overlapping spot radio beams on the surface of the earth. It is also known to determine from which of the plurality of spot beams the terminal receives broadcasts or other signals approximately to determine or measure the position of the terminal, on the surface of the earth, by finding out it which spot beam the terminal is situated. Spot beams tend to be relatively large, and such a position measurement or determination, although very fast, is very inaccurate. The present invention seeks to improve upon the accuracy of such a spot beam position determination or measurement.

According to a first aspect, the present invention consists in a radio system comprising a plurality of spaced radio sources, each of said spaced radio sources being operative to provide signals in a respective radio field, said system comprising a terminal, operative to measure the strength of the signals from the spaced radio sources, said system being operative to determine which of said measured signals have a strength exceeding a predetermined limit and operative to determine in which out of a plurality of zones, relative to said spaced plurality of radio sources, said terminal is located.

According to a second aspect, the present invention consists a method for finding the position of a radio terminal, comprising the steps of: providing a plurality of spaced radio sources, each of said spaced radio sources providing signals in a respective radio field; said terminal measuring the strength of the signals from the spaced radio sources; determining which of said measured signals have a strength exceeding a predetermined limit; and determining in which out of a plurality of zones, relative to said spaced plurality of radio sources, said terminal is located.

The invention further provides a system and method wherein each of the signals comprises digital data, the system and method assessing the strength of the radio signals by measuring the bit error rate of the digital data.

The invention further provides a system and method including measurement of the strength of said radio signals by measuring the amplitude of each of the radio signals.

The invention, yet further, provides a system and method for a satellite communications comprising the terminal, a communications satellite and an earth station, and wherein the plurality of spaced radio signals is provided in the form of radio beams, sent, by the satellite, towards the terminal.

The invention, still further, provides a system and method, where measurement of said strength of radio signals is achieved by taking an average of plural assessments for the strength radio signals from each receivable beam.

The invention further provides a system and method wherein each of the plurality of radio beams has a rapidly fluctuating edge response, wherein the plurality of radio beams move in an array pattern relative to the user terminal, and wherein the averaging of plural assessments for radio signals from each receivable beam compensates for highs and lows in said rapidly fluctuating edge response.

The invention further provides a system and method wherein the terminal is operative to make plural assessments of strength of radio signals from each of the plurality of radio beams from which radio signals are receivable, wherein the terminal is operative to store the result of the plural assessments, and wherein the terminal is operative to employ said previously stored assessments zone is occupied by said terminal.

The invention, even further, provides a system and method wherein the terminal is operative to send information to the earth station, via the satellite, wherein the terminal is operative to relay, to said earth station, assessment of strength of radio signal on each instance of receipt of a radio signal by the terminal, and wherein the earth station is operative to determine which zone is occupied by the terminal.

In addition, the invention also provides a system and method wherein the terminal is operative to send information to the earth station, via the satellite, and wherein the terminal is operative to determine and to relay to said earth station, which zone the terminal occupies.

The invention also provides a system and method where the terminal is on the surface of the earth.

The invention is further explained, by way of example, by the following description, taken in conjunction with the appended drawings, in which:
Figure 1 shows a planar constellation of communications satellites disposed about the earth.
Figure 2 illustrates how the communications satellites are disposed in orthogonal orbital planes.
Figure 3 shows the structure of the cone of radio coverage provided by each communications satellite and illustrates the spot beams.
Figure 4 is a graph of an exemplary field strength for signals from a beam.
Figure 5 is a schematic view of the general situation where an earth station and a terminal communicate with one another via the satellite 10.
Figure 6 shows a group of adjacent, overlapping spot beams and their associated zones.
Figure 7 is an alternative set of zones based on selection of a smaller predetermined field strength; and
Figure 8 is a flow chart of the activity of the user terminal.

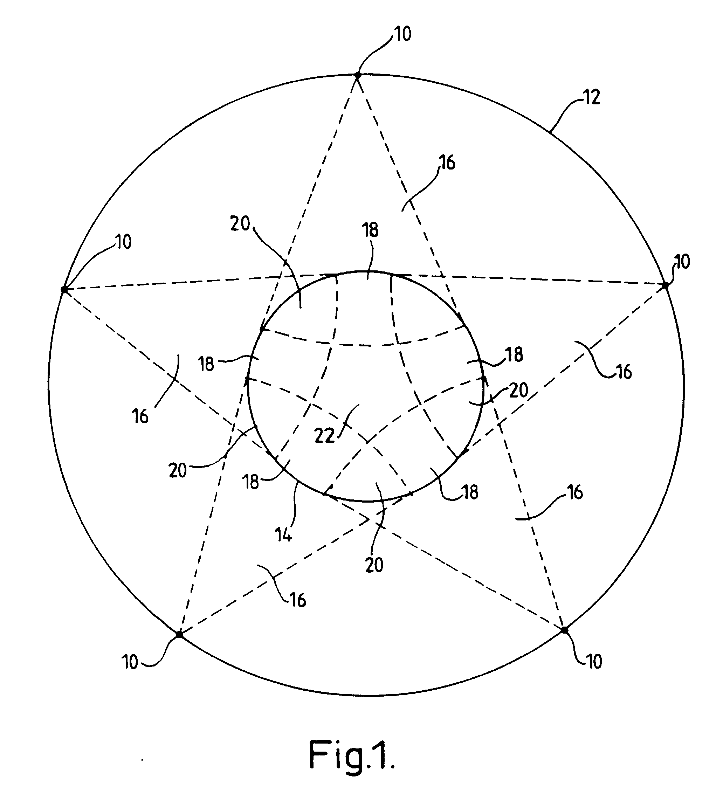

Attention is firstly drawn to Figure 1. Figure 1 shows a planar constellation of communications satellites disposed about the earth.

The plurality of communications satellites 10 are evenly disposed around a circular orbit 12 above the surface of the earth 14. Each of the communications satellites 10 is designed to provide radio communications with apparatus on the surface to the earth 14 when the individual communications satellite 10 is more than 10 degrees above the horizon. Each communications satellite 10 therefore provides a cone 16 of radio coverage which intersects with the surface of the earth 14.

The surface of the earth has three types of areas. A first type of area 18 is one which has radio coverage from only one communications satellite 10. A second type of area 20 is an area where there is radio coverage from more than one communications satellite 10. Finally, a third type of area 22 receives radio coverage from none of the communications satellites 10 in the orbit 12 shown.

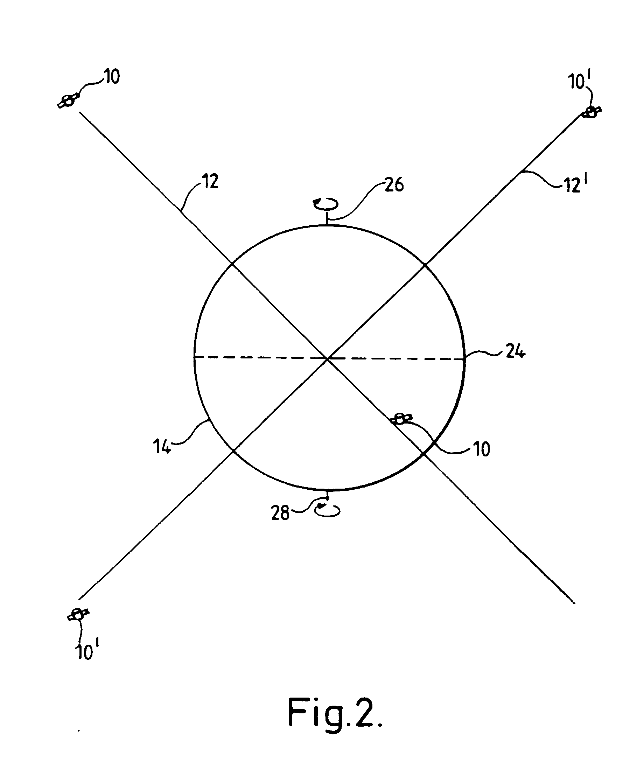

Figure 2 illustrates how the communications satellites 10 are disposed in orthogonal orbital planes.

The first orbit 12 of Figure 1 is supplemented by a second orbit 12' having communications satellites 10 disposed there about in a similar manner to that shown in Figure 1. The orbits 12' are orthogonal to one another, each being inclined at 45 degrees to the equator 24 and having planes which are orthogonal (at 90 degrees ) to each other.

In the example shown, the communications satellites 10 orbit above the surface of the earth 14 at an altitude of 10 500km. Those skilled in the art will be aware that other orbital heights and numbers of communications satellites 10 may be used in each orbit 12, 12'. This configuration is preferred because the example provides global radio coverage of the earth 14, even to the north 26 and south 28 poles, with a minimum number of communications satellites 10. In particular, the orthogonality of the orbits ensures that the communications satellites 10 of the second orbit 12' provides radio coverage for the third types of area 22 of no radio coverage for the communications satellites in the first orbit 12, and the communications satellites 10 in the first orbit 12 provide radio coverage for those areas 22 of the third type where the communications satellites 10 of the second orbit 12' provide no radio coverage.

It will become clear that, although the two orbits 12, 12' are here shown to be of the same radius, the invention as hereinbefore and hereinafter described will function with orbits 12, 12' of different radii. Equally, there may be more than two orbits 12, 12 '.

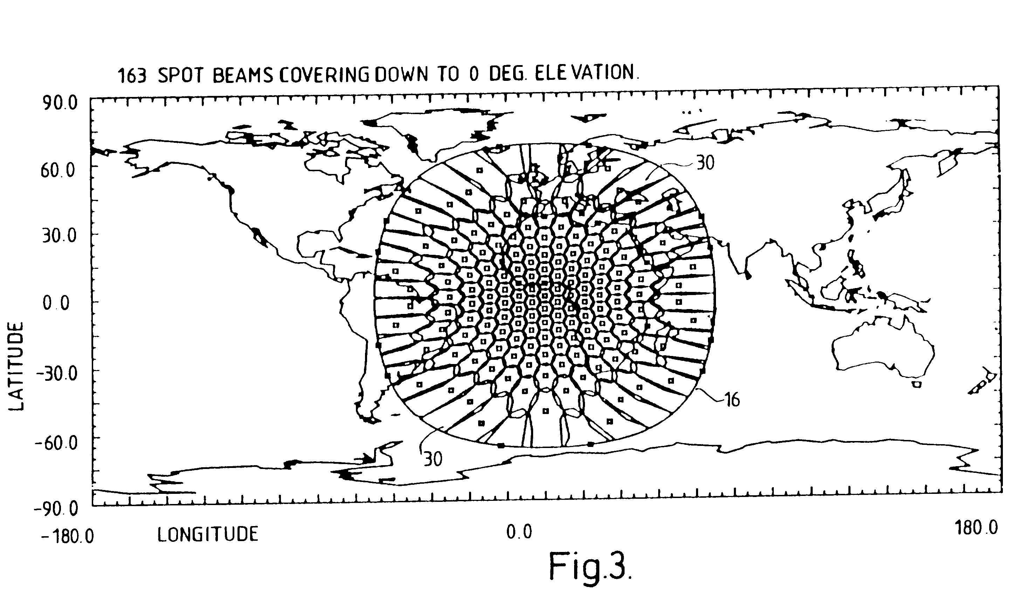

Figure 3 shows the structure of the cone 16 of radio coverage provided by each communications satellite 10. For convenience, the radio coverage cone 16 is shown centred, on a map of the earth, at latitude 0 degrees at longitude 0 degrees. The cone 16 of radio coverage is divided into a plurality of spot beams 30, by means of a corresponding plurality of directional antennae on the communications satellite 10. The communications satellite 10 is intended for mobile radio telephone communications and each of the spot beams 30 corresponds, roughly, to the equivalent of a cell in a cellular radio telephone network. In Figure 3, the cone of radio coverage 16 is distorted due to the geometry of the map of the earth's surface provided. Figure 3 also shows the extent of interaction of the cone 16 of radio coverage down to the edges of the cone 16 being tangential to the earth's surface, that is, to the point where the cone 16 represents a horizontal incidence at its edges, with the surface of the earth. By contrast, Figure 1 shows the cone 16 at a minimum of 10 degrees elevation to the surface of the earth.

It is to be observed, that because of the curvature of the earth, the spot beams 30 are of near uniform, slightly overlapping circular shape at the centre whereas, at the edges, the oblique incidences of the spot beams 30 onto the surface of the earth 14 causes considerable distortion of shape.

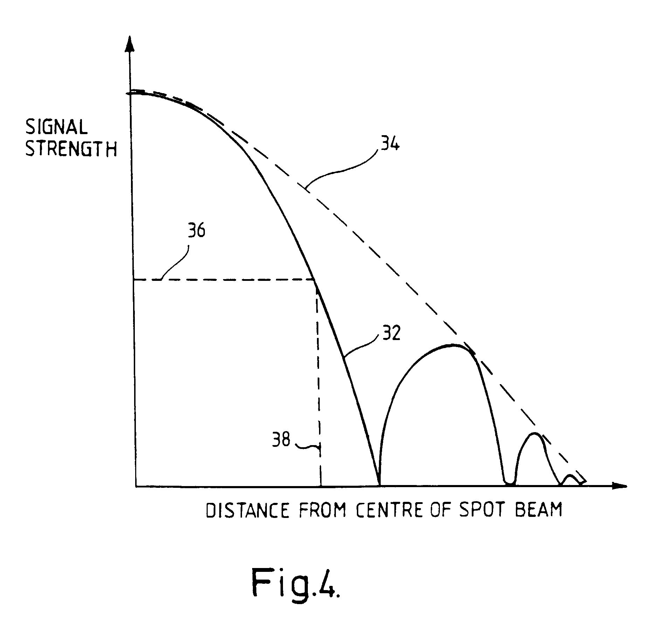

Although the spot beams 30 are depicted as having firm edges, it is to be understood that, in fact, the spot beams 30 do not cease abruptly. Figure 4 shows an example of a spot beam response. The signal strength is plotted against distance from the centre of the spot beam 30. The signal strength curve 32 is a rapidly fluctuating function of distance, having many peaks and nulls, but generally conforming to an envelope 34. At a predetermined signal strength 36, selected to be the least acceptable for service, the perimeter distance 38 for the spot beams 30 is determined, and this corresponds to the firm boundaries shown in other Figures. Figure 4 makes it clear, however, that the spot beams 30 in fact provide radio signals well into each others perimeters 38, even although the signal strength is below service strength.

The satellite 10 puts out regular broadcasts on each of the spot beams 30, each broadcast providing identification of from which spot beam 30 the broadcast originates. The user terminal 48 listens to the broadcasts from the spot beams in order for the position of the terminal 48, as is hereinafter described, to be found.

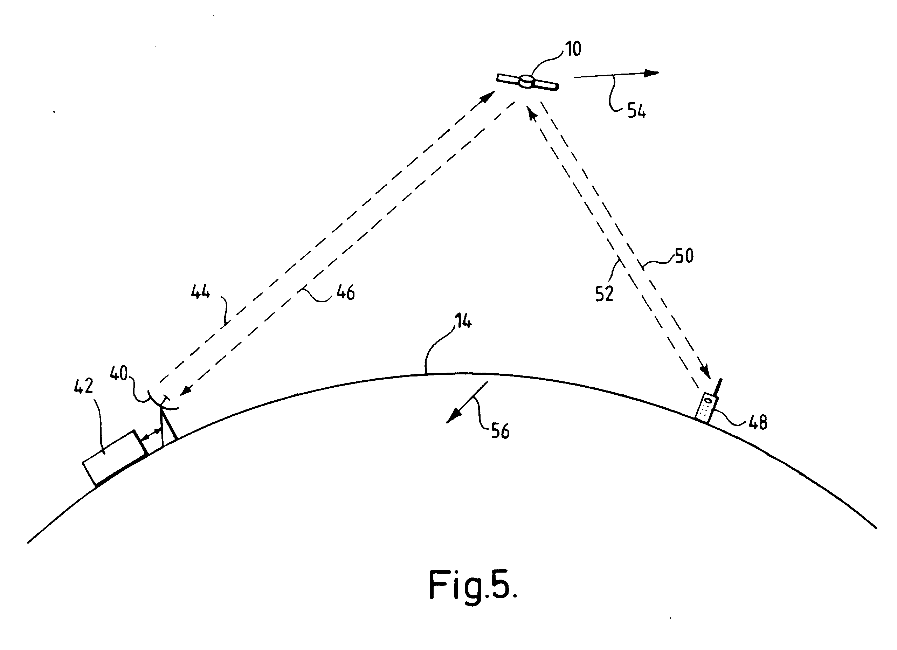

Figure 5 is a schematic view of the general situation where an earth station and a terminal communicate with one another via the satellite 10.

The earth station 40 further comprises an earth station controller 42 which controls the activity of the earth station 40. The earth station 40 is located at a first point on the surface of the earth 14 and the terminal 48 may be at any other point on the surface of the earth within range of the communications satellite 10 when the communications satellite 10 is in range of the earth station 40.

The earth station 40 communicates with the communications satellite 10 via an uplink radio link 44 using frequencies in the band 5150 to 5250 megahertz. The earth station 40 receives signals from the communications satellite 10 on a downlink radio link 46 using signals in the frequency range 6975 to 7075 megahertz.

A terminal 48 receives signals from the communications satellite 10 via a terminal downlink 50 using frequencies in the range 2170 to 2200 megahertz. The terminal 48 sends messages and signals to the communications satellite 10 via a terminal uplink 52 operating in the frequency band 1980 to 2010 megahertz. These frequencies are merely exemplary and those skilled in the art will be aware from the following description, that the invention could be practised using numerous other frequencies for the uplinks and downlinks.

The parameters or the orbit 12 12' of the communications satellite 10 10' and its position in that orbit 12 12', at any instant, are known with great precision by the earth station controller 42. Thus, the earth station controller 42, at any instant, knows the position of each of the spot beams 30 associated with a particular communications satellite 10 10'.

The communications satellite 10 10' will only be in communication with one earth station 40 at a time, but may be in communication with a great many terminals 48. Each terminal will be in one particular spot beam 30 of the plurality of spot beams shown in Figure 3.

The communications satellite 10 will be moving relative to the surface of the earth 14, and therefore relative to the earth station 40 and to the terminal 48, as indicated in a first arrow 54. Likewise, the surface of the earth 14 will be moving relative to the orbit 12 12' of the communications satellite 10 as generically indicated by a second arrow 56. These combined movements mean that the pattern of spot beams 30, shown in Figure 3, will move continuously across the surface of the earth 14. In the example given, with the orbit heights indicated, the vector sum of the two motions works out close to 5 Km per second, while the individual spot beams 30 can be many hundreds of kilometres in diameter.

During message exchange, such as a telephone call or a digital data exchange, the earth station 40 sends out a signal on the uplink radio link 44 to the communications satellite 10 which is, in turn, sent to the terminal 48 via the terminal downlink 50. The terminal 48 sends messages to the earth station 40 via the terminal uplink 52 and the downlink radio link 46, back to the earth station 40. The earth station controller 42 controls the earth station 40 and performs any computations required at the earth station 40.

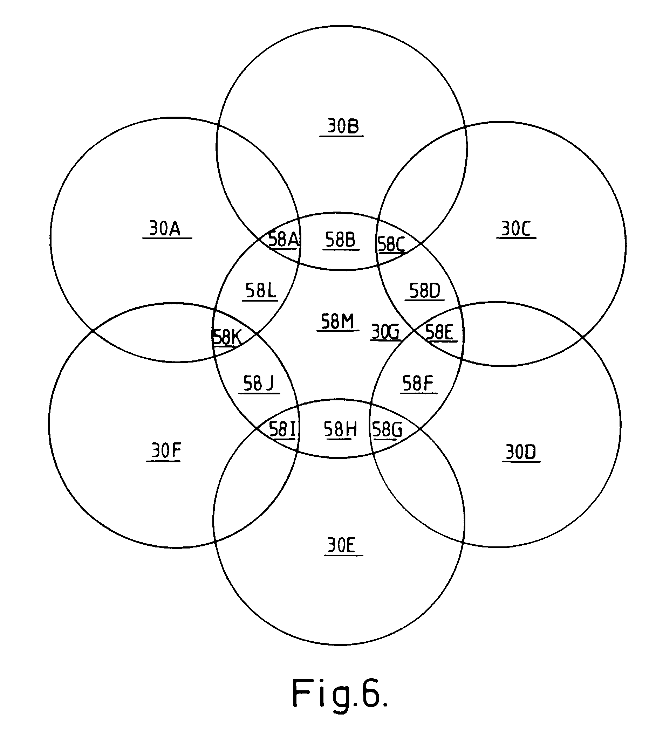

Figure 6 shows a first example of a group of adjacent, overlapping spot beams 30A-G and their associated positional zones. The spot beams 30A-G are shown as a symmetrical set, such as would be found near the centre of the cone 16 of radio coverage of Figure 3. It is to be appreciated that the distorted shapes at the edge of the cone of radio coverage 16 would result in similar, if distorted overlaps and zones so that the example of Figure 6 is applicable throughout the cone 16 of radio coverage.

In the example of Figure 6, a predetermined radio signal strength, with regard to Figure 4, has been chosen where the extent of an adjacent spot beam 30A-F has been chosen which ensures that the extent of overlap does not extend as far as the centre of the central spot beam 30G. The user terminal 48 listens for signals, from all of the spot beams 30A-G, and reports them back to the earth station 40. In one alternative, the terminal 48 itself decides which beams 30A-G provide signal strengths above a predetermined limit. In another alternative, the terminal 48 reports back, to the earth station 40, the actual signal strengths and the earth station 40 decides which beams 30A-G provide signals above the predetermined strength. In either event, the earth station 40 determines the zone 58A-M, occupied by the terminal 48, according to table 1, shown below:

**TABLE 1**

| RELATIONSHIP BETWEEN SIGNALS HEARD AND ZONE | |
|---|---|
| COMBINATION HEARD | ZONE |
| 30G alone | 58M |
| 30G and 30B | 58B |
| 30G and 30B and 30C | 58C |
| 30G and 30C | 58D |
| 30G and 30C and 30D | 58E |
| 30G and 30D | 58F |
| 30G and 30D and 30E | 58G |
| 30G and 30E | 58H |
| 30G and 30E and 30F | 58I |
| 30G and 30F | 58J |
| 30G and 30A and 30F | 58K |
| 30G and 30A | 58L |
| 30G and 30A and 30B | 58A |

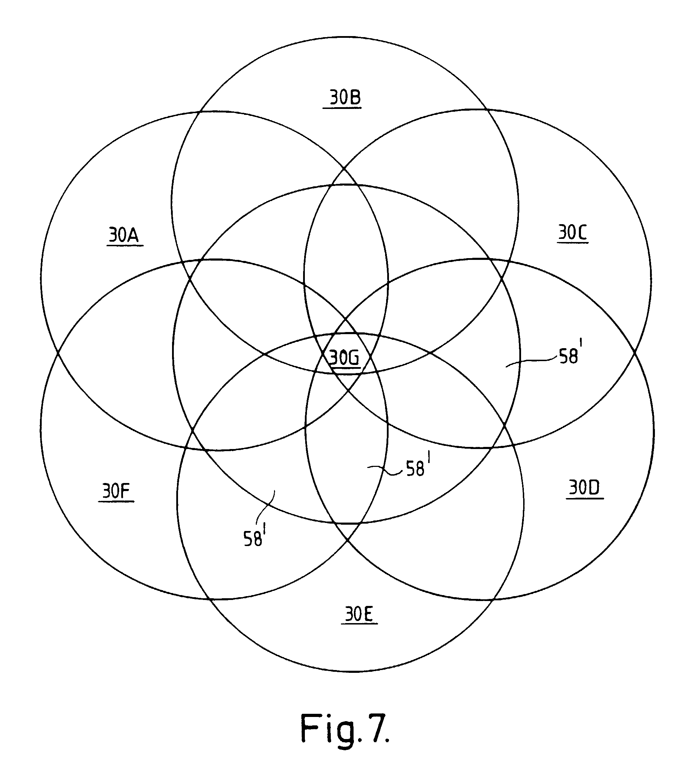

Figure 7 shows an alternative signal strength criterion where the signal strength is selected such that the extent of each adjacent beam 30A-F overlaps further than the centre of the main beam 30G, Here, an altogether new pattern involving a plurality of other zones 58', of which only a few are given reference numbers because their large number would clutter the drawing, is provided. Nonetheless, the pattern of Figure 7 complies with the present invention in that the particular zone 58' in which the terminal 48 lies is determined by selection of a predetermined signal strength and the combination of from which spot beams 30A-G signals can be heard above the predetermined signal strength.

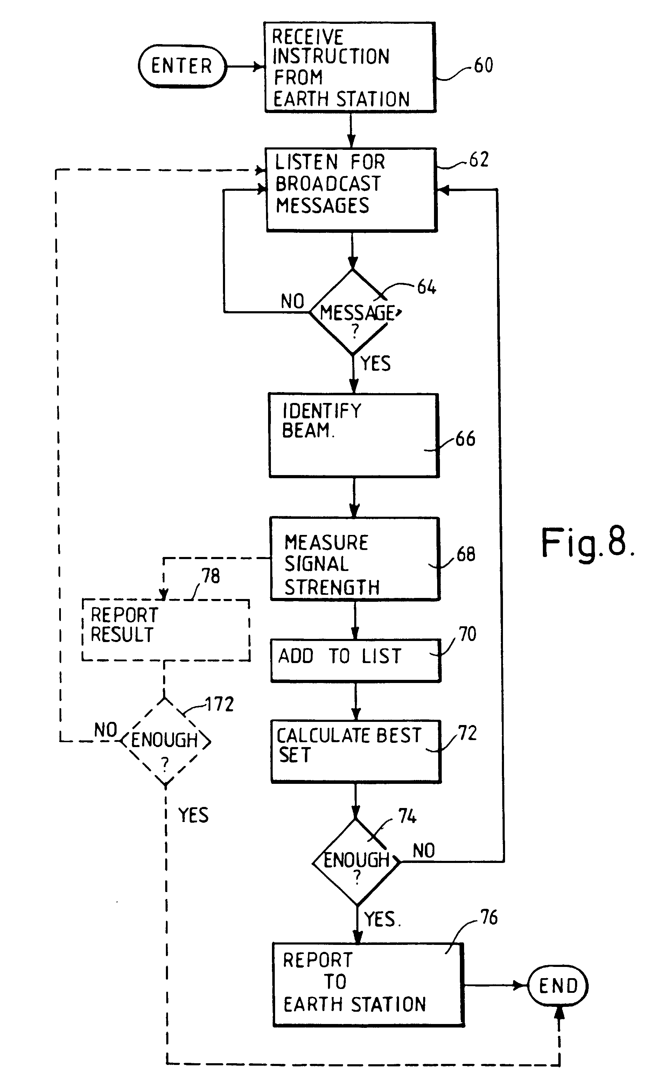

Figure 8 is a flow chart showing the activities of the user terminal 48 when listening to broadcast messages from the adjacent, abutting and overlapping spot beams 30B-30G.

Entry is to a first activity 60 where the user terminal 48 receives an instruction, from the earth station 38, to determine where the user terminal 48 may be located.

Control then passes to a second activity 62 where the user terminal 48 listens for any broadcast messages, which it can hear, from the earth station 40. Each spot beam 30A-G has its own identity message, so that the beam of origin of a broadcast can be identified.

When a first test 64 detects that a broadcast message can be heard, control passes to an third activity 66 where the user terminal 48 extracts the beam identity from the broadcast signal and passes control to a fourth activity 68 where the user terminal 48 measures the signal strength.

Signal strength measurement can take many forms. A first preferred method is simply to measure the amplitude of the received broadcast message. A second preferred method is to measure the "bit error rate" (BER) of a digital message received in the broadcast signal, where an estimation of the proportion of all of the binary digits which were erroneously received as against the total number of binary digits in the message gives a measure of signal strength.

Control then passes to a fifth activity 70 where the identity of the beam 30 wherefrom the broadcast signal was received and the corresponding measurement of the signal strength are stored in a list. When enough results have been received, a sixth activity 72 calculates to which of the adjacent overlapping beams 30A-30G the user terminal 48 deems to have exceeded the predetermined signal strength.

While it is possible to make a measurement of the signal strength for each spot beam 30A-30G based on just one measurement (if available) per spot beam 30A-30G, it is preferred that plural measurements per spot beam 30A-30G are made. Returning briefly to Figure 4, it is to be observed that, despite a potentially high amplitude, the user terminal 48 may, for the moment, be in a deep null where a false impression of the signal strength is given. However, it is to be recalled that the array of spot beams 30 is sweeping across the surface of the earth 14 in excess of 4Km per second, so that a user terminal 48, momentarily in a null, is soon removed from the null and receives a signal of more appropriately representative strength.

Likewise, for geographical reasons, such as hills or buildings or other obstructions, a particular adjacent spot beam 30A-30G may not be audible to the user terminal 48 or may have a severely attenuated signal. Once again, although there is no guarantee, the movement of the array of spot beams 30 across the surface of the earth 14 should assist in gaining a more accurate representation of the signal through time.

It therefore is preferred that a plurality of samples of signal strength are made for signals from all audible adjacent spot beams 30A-30G. When a second test 74 determines that a sufficient number of samples have been taken, control passes to seventh activity 76 where the user terminal 48 reports the result back to the earth station 40. If the second test 74 determines that not enough samples have been collected, control passes back to the second activity 62 where more signals are sought.

The seventh activity 76 exits to allow the user terminal 48 to continue with whatever activities it is thereafter required to do.

As a variant of the flow chart of Figure 8, it is not absolutely necessary to incorporate the first activity 60. Instead, the user terminal 48 can continuously keep a running log of a set of the most recently received messages from spot beams 30 to be stored in the fifth activity 70 and reported to the earth station 40 in the seventh activity 76 only when the earth station makes a request for the information, either directly or implicitly. This has the advantage that results are instantly available to the earth station 40 without having to wait for the user terminal 48 to gather samples.

It is not imperative that the user terminal 48 itself be used for determining which of the signals from the adjacent overlapping spot beams 30B-30G exceed the predetermined signal strength. As an alternative, in Figure 8, shown in broken line, the fourth activity 68 can, alternatively, pass control to an eighth activity 78 where the user terminal 48 passes each signal strength measurement to the earth station 40 as it is received for the earth station 40 to make its own estimation of which signals exceed the predetermined strength. When the user terminal 48 determines it has taken enough samples, or when the earth station 40 informs the user terminal 48 that enough samples have been taken, the user terminal 48 ends this routine, other wise control passes back to the second activity 62 where further samples are sought.

As before, while the eighth activity 78 is shown as reporting each sample as it appears, equally the eighth 78 activity can send a plurality of previous measurements so that the earth station 40 can have instant availability thereof. The earth station 40, calculating which zone 58, 58' is occupied by the terminal 48, and knowing, at any instant, the position of the beams 30 on the surface of the earth, thus automatically knows the position of each zone 58 58' and thus the position of the terminal 48.

The preferred embodiment has been shown in terms of a satellite communications system. It is to be understood that this is not restrictive. The invention can function equally well with the beams 30 replaced by discreet, spaced radio sources such as a plurality of terrestrial base stations and the results reported back to any data receiving device capable of making the assessment/calculation required.

## Claims

1. A radio system comprising a plurality of spaced radio sources, each of said spaced radio sources being operative to provide signals in a respective radio field, said system comprising a terminal, operative to measure the strength of the signals from the spaced radio sources, said system being operative to determine which of said measured signals have a strength exceeding a predetermined limit and operative to determine in which out of a plurality of zones, relative to said spaced plurality of radio sources, said terminal is located.

2. A system, according to claim 1, wherein each of said plurality of radio sources each carry radio signals comprising digital data, said system being operative to assess the strength of said radio signals by measuring the bit error rate of the digital data.

3. A system, according to claim 1, operative to assess the strength of said radio signals by measuring the amplitude of each of the radio signals.

4. A system according to claim 1, 2 or 3 wherein said system is a satellite communications system comprising said terminal, a communications satellite and an earth station, and wherein said plurality of spaced radio sources comprises a plurality of radio beams, sent, by said satellite, towards said terminal.

5. A system, according to 1, 2, 3 or 4, operative to assess said strength of radio signals by taking an average of plural assessments for radio signals from each receivable source.

6. A system, according to claim 5 when claim 5 is dependent upon claim 4, wherein each of said plurality of radio beams has a rapidly fluctuating edge response, wherein said plurality of radio beams move in an array pattern relative to the user terminal, and wherein said averaging of plural assessments for radio signals from each receivable beam compensates for highs and lows in said rapidly fluctuating edge response.

7. A system, according to any of the preceding claims, wherein said terminal is operative to make plural assessments of strength of radio signals from each of said plurality of radio sources from which radio signals are receivable, wherein said terminal is operative to store the result of said plural assessments, and wherein said terminal is operative to employ said previously stored assessments for said system to resolve which zone is occupied by said terminal.

8. A system, according to claim 4, 5 or 6 wherein said terminal is operative to send information to said earth station, via said satellite, wherein said terminal is operative to relay, to said earth station, assessment of strength of a radio signal on each instance of receipt of a radio signal by said terminal, and wherein said earth station is operative to determine which zone is occupied by said terminal.

9. A system, according to claim 4, 5 or 6, wherein said terminal is operative to send information to said earth station, via said satellite, and wherein said terminal is operative to determine and to relay to said earth station, which zone said terminal occupies.

10. A system, according to any of the preceding claims, for use when said terminal is in the surface of the earth.

11. A method for finding the position of a radio terminal, comprising the steps of: providing a plurality of spaced radio sources, each of said spaced radio sources providing signals in a respective radio field; said terminal measuring the strength of the signals from the spaced radio sources; determining which of said measured signals have a strength exceeding a predetermined limit; and determining in which out of a plurality of zones, relative to said spaced plurality of radio sources, said terminal is located.

12. A method, according to claim 11, including the steps of providing digital data in each of said signals, and assessing the strength of said signals by measuring the bit error rate of the digital data.

13. A method, according to claim 11, including the step of assessing the strength of said radio signals by measuring the amplitude of each of the radio signals.

14. A method according to claim 11, 12 or 13 for use in a satellite communications system comprising said terminal, a communications satellite and an earth station, said method including the step of employing said communications satellite to send said plurality of radio beams towards said terminal.

15. A method, according to claim 11, 12, 13 or 14, including the step of assessing said strength of radio signals by taking an average of plural assessments of strength for radio signals from each receivable radio source.

16. A method, according to claim 15 when claim 15 is dependent upon claim 14, for use when each of said plurality of radio beams has a rapidly fluctuating edge response, said method including the steps of causing said plurality of radio beams to move in an array pattern relative to said terminal, and averaging of plural assessments for the strengths of radio signals from each receivable beam to compensate for highs and lows in said rapidly fluctuating edge response.

17. A method, according to any of claims 11 to 16, including the steps of said terminal making plural assessments of strength of radio signals from each of said plurality of radio sources from which radio signals are receivable, said terminal storing the result of said plural assessments, and said terminal employing said previously stored assessments to resolve which zone is occupied by said terminal.

18. A method, according to claim 15, 16 or 17 including the steps of said terminal sending information to said earth station, via said satellite, said terminal relaying, to said earth station, assessment of strength of radio signal on each instance of receipt of a radio signal by said terminal, and said earth station determining which zone is occupied by said terminal.

19. A method, according to claim 15, 16 or 17, including the steps of said terminal sending information to said earth station, via said satellite, said terminal determining and relaying to said earth station, which zone said terminal occupies.

20. A method, according to any of claims 11 to 19, for use when said terminal is in the surface of the earth.
